(19) Europäisches Patentamt
European Patent Office
Office européen des brevets

(11) Veröffentlichungsnummer: **0 321 843 B1**

(12) **EUROPÄISCHE PATENTSCHRIFT**

(45) Veröffentlichungstag der Patentschrift: **10.08.94**

(51) Int. Cl.$^5$: **B32B 27/20**, B32B 27/32

(21) Anmeldenummer: **88120883.9**

(22) Anmeldetag: **14.12.88**

# (54) Opake Mehrschichtfolie mit inhärenter Delaminierungsstabilität.

(30) Priorität: **23.12.87 DE 3743791**

(43) Veröffentlichungstag der Anmeldung:
**28.06.89 Patentblatt 89/26**

(45) Bekanntmachung des Hinweises auf die Patenterteilung:
**10.08.94 Patentblatt 94/32**

(84) Benannte Vertragsstaaten:
**BE DE ES FR GB IT NL**

(56) Entgegenhaltungen:
**EP-A- 0 177 872**
**EP-A- 0 180 087**
**EP-A- 0 247 898**

(73) Patentinhaber: **HOECHST AKTIENGESELL-SCHAFT**

**D-65926 Frankfurt(DE)**

(72) Erfinder: **Janocha, Siegfried, Dr.**
**Weinfeldstrasse 28**
**D-6200 Wiesbaden(DE)**
Erfinder: **Schlögl, Gunter, Dr.**
**Finkenweg 2**
**D-6233 Kelkheim(DE)**
Erfinder: **Crass, Günther**
**Bachstrassse 7**
**D-6204 Taunusstein 4(DE)**
Erfinder: **Bothe, Lothar, Dr.**
**Kurt-Schumacher-Strasse 69E**
**D-6500 Mainz-Gonsenheim(DE)**

**EP 0 321 843 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine coextrudierte, biaxial streckorientierte, opake polyolefinische Mehrschichtfolie, umfassend eine opake Kernschicht und zwei transparente Deckschichten.

Unter dem Begriff "opak" soll im Rahmen der Offenbarung der Erfindung die Eigenschaft der betreffenden Schicht verstanden werden, sichtbares Licht zu streuen.

Im Stand der Technik sind bereits eine ganze Reihe von opaken Polyolefinfolien bekannt, die teilweise einschichtig sind und als sogenanntes synthetisches Papier benutzt werden oder die aus einer opaken Trägerfolie mit einer oder zwei transparenten Deckschichten aufgebaut sind. Beispielhaft für die Vielzahl der Druckschriften, die sich mit opaken Folien befassen, sei an dieser Stelle auf die DE-B-28 14 311 verwiesen.

Die EP-A-0 177 872 beschreibt opake Folien, die eine Dichte im Bereich von 0,4 bis 0,6 $g/cm^3$ aufweisen. Diese niedrige Dichte wird durch Füllstoffe in einer Menge von 16 bis 30 Gew.-% in Verbindung mit besonderen Streckbedingungen erzielt. Diese Folien sind bezüglich ihrer Delaminierungsfestigkeit verbesserungsbedürftig.

Die EP-A-0 180 087 beschreibt harzhaltige Folien, welche 3 bis 30 Gew.-% Harz in der Basisschicht enthalten. Die Folien zeichnen sich durch verbesserte Siegel- und Barriereeigenschaften sowie durch eine hervorragende Transparenz aus.

Den bekannten opaken Folien ist gemeinsam, daß ihr opakes Aussehen daher resultiert, daß aufgrund des Gehaltes der opaken Schicht an inerten Füllstoffen im Zusammenwirken mit dem biaxialen Strecken unter bestimmten Verfahrensbedingungen eine große Anzahl von Mikrohohlräumen (Vakuolen) in der Schichtebene der opaken Schicht erzeugt wird, woran das durch die Schicht hindurchtretende sichtbare Licht gebrochen wird. Beim Strecken der Folie wird die Polymermatrix an den Korngrenzen der mit dem Polyolefin unverträglichen anorganischen und/oder organischen Füllstoffe aufgerissen, was zur Entstehung der genannten Vakuolen, d.h. zu freien (leeren oder ungefüllten) Räumen, führt; es versteht sich von selbst, daß diese Vakuolen oder Mikrohohlräume über das ganze Volumen der die Füllstoffe enthaltenden Schicht verteilt sind.

Die bisher bekannten opaken Folien weisen aufgrund ihrer Struktur alle die Eigenschaft auf, daß sie mehr oder weniger leicht delaminieren, d.h. eine geringe Festigkeit in der Ebene der opaken Schicht besitzen. Für einige spezielle Anwendungen wirkt sich die Eigenschaft der leichten Delaminierbarkeit der opaken Schicht positiv aus (siehe EP-A-0 093 370), für viele andere Anwendungsbereiche ist die Delaminierungstendenz opaker Folien allerdings unerwünscht und sollte vermieden werden.

Es stellt sich daher die Aufgabe, eine coextrudierte, biaxial orientierte, opake polyolefinische Mehrschichtfolie zur Verfügung zu stellen, die eine hohe Delaminierungsstabilität besitzt.

Gelöst wird diese Aufgabe durch eine Folie der eingangs genannten Gattung, deren kennzeichnende Merkmale darin bestehen, daß die Kernschicht im wesentlichen aus einer Mischung von

1.) 45 bis 90 Gew.-% thermoplastisches Polymeres auf Basis von Propylen,
2.) 5 bis 25 Gew.-% inerten, partikelförmigen Füllstoff,
3.) 5 bis 30 Gew.-% mit dem thermoplastischen Polymeren verträgliches Kohlenwasserstoffharz mit einem Erweichungspunkt im Bereich von 100 bis 160 °C

besteht, wobei die Prozentangaben auf das Gesamtgewicht der Mischung bezogen sind. Die Deckschichten sind frei von Zusätzen an partikelförmigem Füllstoff und Harz. Die abhängigen Ansprüche 2 bis 11 geben zweckmäßige Weiterbildungen der Folie an.

Das Polymere der Kernschicht ist ein Homopolymerisat, ein Mischpolymerisat (Co- oder Terpolymerisat) des Propylens mit Ethylen oder Alpha-Olefinen mit 4 bis 8 C-Atomen oder eine Mischung aus wenigstens zwei dieser Verbindungen, insbesondere eine Mischung aus einem Propylenhomo- und Propylenmischpolymerisat und/oder anderen Polyolefinen mit 2 bis 6 C-Atomen, insbesondere Polyethylen. Das Propylenhomopolymerisat hat einen hohen isotaktischen Anteil, insbesondere mehr als 90 %, bevorzugt mehr als 95 %. Der isotaktische Anteil wird dabei aus der Masse des Polymeren abzüglich der Masse des n-heptanlöslichen Anteils bestimmt. In den Mischpolymerisaten beträgt die Comonomermenge an Nichtpropylenbestandteil im allgemeinen maximal 10 Gew.-%, bezogen auf das Polymerisat. Geeignetes Mischpolymerisat des Propylens sind beispielsweise Blockcopolymere oder statistische Copolymere des Propylens mit alpha-Olefinen mit zwei oder vier C-Atomen (Buten-1). Das Polymere der Kernschicht hat zweckmäßigerweise einen Schmelzflußindex im Bereich von 0,5 g/10 min bis 8 g/10 min bei 230 °C und 2,16 kp Belastung (DIN 53735), insbesondere von 1,5 g/ 10 min bis 4 g/10 min.

Bei den partikelförmigen Füllstoffen handelt es sich um anorganische oder organische, mit dem Polymer der Kernschicht unverträgliche, pulverförmige Materialien. Geeignete anorganische Füllstoffe sind beispielsweise Aluminiumsilikate, Calciumcarbonat, Titandioxid und Siliciumdioxid. Von den Aluminiumsilikaten sind solche, welche Alkali- und/oder Erdalkalimetalle enthalten, bevorzugt. Geeignete organische

Füllstoffteilchen bestehen beispielsweise aus Polyester, insbesondere Polybutylenterephthalat, Polyamiden, insbesondere Polyamid 6, oder Polyacrylharz. Vorzugsweise werden weiße Teilchen auf anorganischer Basis verwendet, welche einen hohen Weißgrad besitzen. Der Weißgrad der Teilchen sollte mindestens 90, insbesondere 95 %, betragen. Er wird gemessen nach DIN 53 163. Der Partikelgeometriewert, d.h. das Verhältnis von Fläche zu Dicke der Partikelteilchen, liegt unter 8, vorzugsweise unter 4, insbesondere unter 2. Der Partikelgeometriewert eines würfelförmigen Teilchens ist folglich 1. Die Partikel können auch kugelartige Form aufweisen. Die mittlere Teilchengröße beträgt 0,2 bis 4, vorzugsweise 2 bis 3 Mikrometer, wobei das größte Teilchen einen Durchmesser von etwa 25 Mikrometer hat. Die Menge der Füllstoffe beträgt wie bereits angegeben 5 bis 25 Gew.-%, wobei vorzugsweise eine Menge im Bereich von 5 bis 15 Gew.-% eingesetzt wird.

Das in der Kernschicht eingesetzte Kohlenwasserstoffharz ist ein niedrigmolekulares synthetisches Harz mit einem Erweichungspunkt von 100 bis 160 °C, bevorzugt von 120 bis 140 °C (bestimmt nach ASTM E 28).

Die Kohlenwasserstoffharze werden gewöhnlich aus harzbildenden Substanzen wie Styrol, Methylstyrol, Vinyltoluol, Inden, Pentadien, Cyclopentadien usw. gebildet. Weitere Einzelheiten sind z.B. in Ullmanns Encyklopädie der Techn. Chemie, 4. neubearbeitete und erweiterte Auflage, Bd. 12 (1976), S. 539-555, Verlag Chemie (Weinheim) zu finden. Erfindungsgemäß werden hydrierte Cyclopentadienharze besonders bevorzugt. Die Farbzahl nach Saybolt (ASTM D 158) ist größer als 20, bevorzugt größer als 25.

Als Stabilisator gegen thermischen Abbau der Polymeren während ihrer Verarbeitung bei der Herstellung der Folie wird der Zusammensetzung der Kernschicht zusätzlich 0,2 bis 0,8 Gew.-% einer Phosphitverbindung zugegeben. In der Praxis hat sich zur Farbstabilisierung insbesondere folgende Verbindung bewährt:

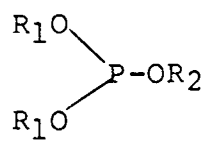

bei der $R_1$ und $R_2$ ein Nonylphenyl-Rest oder ein 2,4-di-tert.butyl-phenyl-Rest bedeutet. $R_1$ kann auch ein Phenylrest, $R_2$ ein n-Decyl-Rest sein.

Als Deckschicht können prinzipiell alle Arten von Deckschichten eingesetzt werden, d.h. solche, die siegelfähig sind, und auch solche, die nicht siegelfähig sind. Nicht siegelfähige Deckschichten zeigen einen Erweichungspunkt, der maximal 10° niedriger ist, gegebenenfalls auch gleich oder höher ist als der Erweichungspunkt der Kernschicht und bestehen beispielsweise aus Propylenhomopolymeren.

Als siegelfähige Deckschichten eingesetzte Olefinharzzusammensetzungen bestehen insbesondere aus Co- oder Terpolymeren aus Ethylen, Propylen, Butylen oder weiteren Alpha-Olefinen mit bis zu 10 C-Atomen oder auch aus Mischungen daraus, wie sie üblicherweise für Siegelschichten verwendet werden. Gewöhnlich kommt dafür ein Copolymeres aus Ethylen und Propylen mit einem Ethylengehalt zwischen 4 und 10 Gew.-% zur Anwendung, es können aber genauso auch Copolymere aus Ethylen und Butylen oder Mischungen aus Ethylen-Butylen-Copolymeren mit Ethylen-Propylen-Butylen-Terpolymeren verwendet werden. Der Schmelzflußindex derartiger Harze liegt im Bereich zwischen 0,1 und 16, insbesondere 6 bis 12 g/10 min, bei 230 °C und 2,16 kp Belastung (DIN 53735).

Die Schichtdicke der Deckschichten liegt erfindungsgemäß im Bereich von 0,1 bis 5, vorzugsweise zwischen 0,5 und 3 Mikrometer. Die Gesamtdicke der Mehrschichtfolie liegt zwischen 20 und 120, bevorzugt zwischen 30 und 80 Mikrometer.

Die Deckschichten können je nach Verwendungszweck der Folie noch weitere Oberflächenschichten tragen, beispielsweise partielle oder vollflächige Beschichtungen aus kaltsiegelfähigem Material oder aufgedampfte, extrem dünne Metallschichten, z.B. aus Aluminium, oder eine Papierschicht unter Ausbildung eines Papierverbundes oder Pappeverbundes.

Die besonders bevorzugte Ausführungsform der erfindungsgemäßen Folie weist zwei unterschiedliche Deckschichten auf, wobei der Folie bifunktionelle Eigenschaften bezüglich ihrer Oberflächen verliehen werden.

Die eine, dünnere Deckschicht besteht aus einem Propylencopolymerisat oder Propylenterpolymerisat mit Alpha-Olefinen mit 2 bis 8 C-Atomen oder einer Polymerenmischung aus zwei oder mehreren dieser Polymerisate und gegebenenfalls Polyethylen oder nur aus Polyethylen. Der Propylenanteil, bezogen auf

diese Deckschicht, beträgt höchstens 95,5 Gew.-%. Diese Deckschicht umfaßt vorzugsweise Propylen/Ethylen-Copolymerisat mit 4,5 bis 10 Gew.-% Ethylenanteil oder Polypropylen/Polyethylen-Blends mit 5 bis 10 Gew.-% Polyethylen. Von den üblichen Polyethylenarten wird LLDPE bevorzugt. Die Schichtdicke dieser Schicht liegt zwischen 0,1 und 2, insbesondere bei 0,4 bis 0,8 Mikrometer. Der Glanz dieser Oberfläche liegt bei einem Meßwinkel von 20° bei kleiner 25.

Die andere, dickere Deckschicht besteht aus einem Propylenhomo- oder einem Propylen/Ethylencopolymerisat, das maximal bis zu 3,5 Gew.-% Ethylen und mindestens 96,5 Gew.-% Propylen enthält, wobei Propylen/Ethylen-Copolymerisate mit einem Ethylen-Gehalt von 2 bis 3 Gew.-% besonders bevorzugt sind. Es ist für die dickere Deckschicht von besonderem Vorteil, wenn im Propylen/Ethylen-Copolymerisat der Anteil an isolierten Ethylen-Einheiten, d. h. der Anteil an einzelnen Ethylenbausteinen, die von Propylen-Einheiten umgeben sind, mehr als 85%, insbesondere mehr als 95%, bezogen auf den Gesamtanteil von Ethylen, beträgt. Die Schichtdicke dieser dickeren Schicht liegt zwischen 1,5 und 5, insbesondere zwischen 2 und 4 Mikrometer. Der Glanz dieser Oberfläche liegt bei einem 20°-Meßwinkel größer 40, insbesondere größer 50. Die Glanzmessung erfolgt in Anlehnung an DIN 67 530.

Die Ermittlung des Anteils an isolierten Ethylen-Einheiten erfolgt nach bekannten Methoden mit Hilfe der $C_{13}$-NMR-Spektroskopie. Das zu untersuchende Copolymerisat wird in einem Lösungsmittelgemisch aus 65 Vol.-% Hexachlorbenzol und 35 Vol.-% 1,1-Dideuterotetrachlorethan gelöst, so daß eine 10 gew.-%ige Lösung entsteht. Als Bezugsstandard wird Octamethyltetrasiloxan (OMTA) hinzugegeben. Das 67,9-MHZ-$C_{13}$-Kernresonanzspektrum wird bei 130°C gemessen. Die Auswertung der Spektren erfolgt nach der in J.C. Randall, "Polymer Sequence Distribution" Academic Press, New York, 1977, beschriebenen Methode.

Der Verteilungsfaktor $V_F$ ist definiert als

$$V_F = C_i/(C_G - C_i)$$

wobei

$C_G$ = Gesamtgehalt an Ethylen im Copolymerisat (Gew.-%)

$C_i$ = Anteil der einzelnen Ethyleneinheiten (Gew.-%), die isoliert zwischen zwei Propyleneinheiten in der Molekülkette vorhanden sind.

Je nach Bedarf steht mit dieser bevorzugten Folie ein Material zur Verfügung, das bifunktionell eingesetzt werden kann, d. h. je nach Bedarf kann der gewünschte Glanzeffekt (matt oder glänzend) durch Auswahl der Oberfläche erhalten werden. Diese Möglichkeit ist von besonderem Interesse bei der Weiterverarbeitung der Folie, was in den Beispielen näher erläutert werden soll.

Die erfindungsgemäße Mehrschichtfolie wird durch Coextrusion der die einzelnen Schichten bildenden schmelzflüssigen Polymermaterialien, Abschreckung des Coextrudates und anschließendes gemeinsames biaxiales Streckorientieren und Hitzefixieren hergestellt. In bevorzugter Ausführungsform des Verfahrens wird die Streckorientierung in der Weise durchgeführt, daß die Polymermatrix der Kernschicht an den inerten Füllstoffteilchen unter Bildung von Mikrohohlräumen aufgerissen wird. Die Dichte der Folie wird dadurch niedriger als die rein rechnerische Dichte auf Basis der Dichte der Einzelkomponenten in der Kernschicht, vorzugsweise ist die Dichte der Kernschicht gleich/kleiner als 0,8, insbesondere gleich/kleiner als 0,65 g/cm$^3$. Die Oberflächen der Deckschichten können erforderlichenfalls nach der Hitzefixierung noch einer Oberflächenbehandlung unterzogen werden, um der Folie für das Aufbringen weiterer Beschichtungen eine verbesserte Aufnahmefähigkeit zu verleihen bzw. um ihre Verklebbarkeit bzw. Kaschierbarkeit zu verbessern. Durch eine Coronabehandlung wird ihre Oberflächenspannung auf Werte von größer als 36 mN/m erhöht und damit ihre Bedruckbarkeit wesentlich verbessert.

Die Basisschicht wird bevorzugt über Masterbatchtechnik erzeugt, d. h. entsprechend den gewünschten Gehalten an Harz und Füllstoff werden Polypropylenrohstoff, Füllstoff-Masterbatch und Harz-Masterbatch einem Extruder zur Bildung der Kernschicht zugefügt. Unter dem Begriff Masterbatch ist bekanntlich eine Stammischung zu verstehen, insbesondere ein granulatförmiges staubfreies Konzentrat eines Kunststoffrohstoffes mit hohen Mengen an Füllstoffen, das in der Masseaufbereitung als Zwischenprodukt verwendet wird, so als Zusatz zu keine Füllstoffe enthaltendem Granulat vor dem Extrudieren, um daraus bestimmte Mengen an Füllstoff enthaltenden Formkörpern herzustellen. Das erfindungsgemäß für den Zusatz des partikelförmigen Füllstoffs eingesetzte Masterbatch zeichnet sich dadurch aus, daß es mehr als 30 Gew.-%, bevorzugt mehr als 40 Gew.-%, bezogen auf das Gesamtgewicht des aus Polymeren und Füllstoff bestehenden Masterbatches, an partikelförmigem Füllstoff enthält, und daß es als zylinder- oder linsenförmiges Granulat vorliegt. Das für den Zusatz des Harzes eingesetzte Masterbatch hat einen Harzgehalt von 40 bis 60 Gew.-%, vorzugsweise von 40 bis 50 Gew.-%, und einen Polypropylengehalt von 40 bis 60 Gew.-%, vorzugsweise 50 bis 60 Gew.-%. Die Kernschicht und/oder die Deckschichten können zusätzlich übliche

Additive wie z.B. Antistatika, Gleitmittel und Stabilisatoren enthalten.

Die erfindungsgemäße Folie eignet sich aufgrund ihrer vorteilhaften Eigenschaften für verschiedene Einsatzzwecke, insbesondere bei denen es auf eine gute Delaminierfestigkeit der Kernschicht ankommt. Neben dem Einsatz als Verpackungsfolie oder heißsiegelfähige Deckfolie zum Verschließen von Verpackungsbehältern ist hier insbesondere noch ihre Verwendung für technische Zwecke, z. B. als Kaschierfolie oder als Trägerfolie für Haftetiketten oder als Klebebänder oder "in-mould-label" zu erwähnen. "In-mould-label" werden bekanntlich bei der Herstellung von Spritzgußartikeln oder bei der Herstellung von flaschenförmigen Behältern auf Basis von polyolefinischem Material in die Form eingelegt. Das extrudierte Material verbindet sich dann mit der Siegelschicht der eingelegten Folie.

Durch die nachfolgenden Ausführungsbeispiele soll die Erfindung im Vergleich zu dem Stand der Technik näher erläutert werden.

Beispiel 1

Es wurde nach dem Coextrusionsverfahren eine Dreischichtfolie hergestellt, die nach der biaxialen Streckorientierung und Wärmefixierung eine Gesamtdicke von 80 Mikrometer aufwies. Die beidseitig auf der Kernschicht angeordneten Deckschichten besaßen jeweils eine Dicke von etwa 0,6 Mikrometer. Die Deckschichten bestanden beide aus einem statistischen Ethylen-Propylen-Copolymerisat mit einem Ethylenanteil von 5 Gew.-%, wobei der Anteil an isolierten Ethylenbausteinen 90 % ($V_F$ = 9) betrug, bezogen auf den gesamten Ethylenanteil. Die Kernschicht bestand aus 80 Gew.-% Polypropylen, 10 Gew.-% $CaCO_3$ (mittlere Teilchengröße 3 Mikrometer, Weißgrad 93 %) und 10 Gew.-% eines hydrierten Kohlenwasserstoffharzes auf Basis von Cyclopentadien (Erweichungstemperatur 140 °C, Farbzahl nach Saybolt 26) und enthielt zusätzlich 0,5 Gew.-% phosphorhaltigen Stabilisator, bezogen auf das Gewicht der Kernschicht, der unter der Markenbezeichnung IRGAFOS(R)P-EPQ (Herst.: Ciba Geigy) erhältlich ist. Die an der hergestellten Folie gemessenen Glanzwerte sind in der Tabelle am Ende der Beispiele angegeben. Die Delaminierfestigkeit in der Kernschicht betrug mehr als 2,6 N/15 mm, ihre Dichte 0,60 g/cm$^3$.

Beispiel 2

Es wurde eine Folie hergestellt wie in Beispiel 1, jedoch mit dem Unterschied, daß der Gehalt an Kohlenwasserstoffharz 20 Gew.-% betrug (Glanzwerte siehe Tabelle). Die Delaminierfestigkeit in der Kernschicht betrug mehr als 2,6 N/15 mm, ihre Dichte 0,65 g/cm$^3$.

Beispiel 3

Es wurde eine Dreischichtfolie hergestellt mit einer Gesamtdicke von 80 Mikrometer. Beidseitig auf der Kernschicht waren verschiedene Deckschichten angeordnet. Deckschicht 1 wies eine Schichtdicke von 3,5 Mikrometer auf und bestand aus einem Propylen/Ethylen-Copolymerisat mit einem Ethylenanteil von 2,2 % ($V_F$ = 19). Deckschicht 2 wies eine Schichtdicke von 0,6 Mikrometer auf und bestand aus einem Propylen/Ethylen-Copolymerisat mit einem Ethylenanteil von 5 %. Die Kernschicht bestand aus 80 Gew.-% Polypropylen, 10 Gew.-% $CaCO_3$ (mittlere Teilchengröße 3 Mikrometer, Weißgrad 93 %) und 10 Gew.-% eines hydrierten Kohlenwasserstoffharzes auf Basis von Cyclopentadien (Erweichungstemperatur 140 °C, Farbzahl nach Saybolt 26).

Die an den Oberflächen der Folie des Beispiels 3 gemessenen Glanzwerte sind in der Tabelle am Ende der Beispiele zusammengestellt. Die Delaminierfestigkeit der Kernschicht betrug mehr als 2,6 N/15 mm, ihre Dichte 0,62 g/cm$^3$.

Vergleichsbeispiel A

Es wurde eine Folie hergestellt wie in Beispiel 1, jedoch ohne den Zusatz von Cyclopentadienharz zur Kernschicht. Die Delaminierfestigkeit der Kernschicht betrug 1,2 N/15 mm, ihre Dichte 0,60 g/cm$^3$.

Vergleichsbeispiel B

Es wurde eine Folie hergestellt wie in Beispiel 3, jedoch ohne den Zusatz von Cyclopentadienharz zur Kernschicht. Die Delaminierfestigkeit der Kernschicht betrug 1,2 N/15 mm, ihre Dichte 0,62 g/cm$^3$.

Methode zur Bestimmung der Delaminierfestigkeit

Auf die zu prüfende Folie wird ein 1,5 cm breiter Klebestreifen geklebt. Nach einer Verweilzeit von 5 min wird der Klebestreifen mittels einer Zugmaschine wieder abgezogen (Prüfgeschwindigkeit: 0,2 m/min). Die Delaminierfestigkeit wird als sehr gut bezeichnet, wenn nach Abschälen des Klebestreifens keine Trennung in der vakuolenhaltigen Kernschicht festgestellt wird.

Die hergestellten Folien wurden dem beschriebenen Dalaminiertest unterzogen. Während die Folien der Beispiele 1 bis 3 nicht delaminierten, wurde bei den Vergleichsmustern an der Folie beim Abziehen des Klebebandes Delaminierung festgestellt. An dem Kraft-Weg-Diagramm ergab sich eine Delaminierfestigkeit der Vergleichsmuster von 1,2 N/15 mm. Die Folien der Beispiele 1 bis 3 delaminierten nicht, wobei die Delaminierfestigkeit oberhalb der zur Abtrennung des Klebebandes benötigten Kraft von 2,6 N/15 mm lag.

| | Glanz bei 20° | |
|---|---|---|
| | Deckschicht 1 | Deckschicht 2 |
| Beispiel 1 | 12 | 12 |
| Beispiel 2 | 15 | 15 |
| Beispiel 3 | 70 | 10 |
| Vergleichsbeispiel A | 8 | 8 |
| Vergleichsbeispiel B | 35 | 8 |

**Patentansprüche**

1. Coextrudierte, biaxial streckorientierte, opake polyolefinische Mehrschichtfolie umfassend eine opake Kernschicht und zwei transparente Deckschichten, dadurch gekennzeichnet, daß die Kernschicht im wesentlichen aus einer Mischung von
   1.) 45 bis 90 Gew.-% thermoplastisches Polymeres auf Basis von Propylen,
   2.) 5 bis 25 Gew.-% inerten, partikelförmigen Füllstoff,
   3.) 5 bis 30 Gew.-% mit dem thermoplastischen Polymeren verträgliches Kohlenwasserstoffharz mit einem Erwei
   chungspunkt im Bereich von 100 bis 160 °C bestimmt nach ASTM E 28 besteht, wobei die Prozentangaben auf das Gesamtgewicht der Mischung bezogen sind.

2. Folie nach Anspruch 1, dadurch gekennzeichnet, daß die Kernschicht zusätzlich
   4.) 0,2 bis 0,8 Gew.-% eines Stabilisators auf Basis einer Phosphitverbindung, bezogen auf das Gesamtgewicht der Mischung, enthält.

3. Folie nach Anspruch 1 oder 2, dadurch gekennzeichnet, daß die Menge an Füllstoff 5 bis 15 Gew.-% beträgt und der eingesetzte Füllstoff eine mittlere Teilchengröße von 0,2 bis 4 Mikrometer und einen Weißgrad von größer 90 % besitzt.

4. Folie nach einem der Ansprüche 1 bis 3, dadurch gekennzeichnet, daß eine oder beide Deckschichten heißsiegelfähig sind.

5. Folie nach einem der Ansprüche 1 bis 4, dadurch gekennzeichnet, daß wenigstens eine der Deckschichten nicht heißsiegelfähig ist und vorzugsweise aus isotaktischem Propylenhomopolymerisat besteht.

6. Folie nach einem der Ansprüche 1 bis 5, dadurch gekennzeichnet, daß sie auf wenigstens einer Oberfläche zusätzlich eine Kaltsiegelschicht, eine Metallschicht und/oder eine Papierschicht aufweist.

7. Folie nach einem der Ansprüche 1 bis 6, dadurch gekennzeichnet, daß die Dicke der Deckschichten 0,1 bis 5, insbesondere 0,5 bis 3 Mikrometer, beträgt, wobei die Gesamtdicke der Folie im Bereich von 20

bis 120 Mikrometer liegt.

**8.** Folie nach einem der Ansprüche 1 bis 7, dadurch gekennzeichnet, daß der Füllstoff Calciumcarbonat und/oder Titandioxid umfaßt.

**9.** Folie nach einem der Ansprüche 1 bis 8, dadurch gekennzeichnet, daß die Dichte der Kernschicht gleich/kleiner als 0,8, insbesondere gleich/kleiner als 0,65 g/$cm^3$ ist.

**10.** Folie nach einem der Ansprüche 1 bis 9, dadurch gekennzeichnet, daß die Delaminierfestigkeit der Kernschicht gleich oder größer als 1,8, insbesondere gleich oder größer als 2 N/15 mm ist.

**11.** Folie nach einem der Ansprüche 1 bis 10, dadurch gekennzeichnet, daß die eine, dünnere Deckschicht eine Dicke von 0,1 bis zu 2 Mikrometer aufweist und aus
- einem Propylenmischpolymerisat oder
- einer Polymermischung von zwei oder mehreren dieser Propylenmischpolymerisate und gegebenenfalls Polyethylen oder
- Polyethylen

besteht, wobei der Propylenanteil in dieser Deckschicht maximal 95,5 Gew.-% beträgt, und daß die andere, dickere Deckschicht eine Dicke von 1,5 bis 5 Mikrometer aufweist und aus
- einem Propylenhomopolymerisat oder
- einem Propylen/Ethylen-Copolymerisat

besteht, wobei der Propylenanteil in dieser Deckschicht mindestens 96,5 Gew.-% beträgt.

## Claims

**1.** Coextruded, biaxially stretch-oriented, opaque polyolefinic multilayered film comprising an opaque core layer and two transparent top layers, characterized in that the core layer essentially comprises a mixture of
1) 45 to 90% by weight of a thermoplastic polymer based on propylene,
2) 5 to 25% by weight of an inert, particulate filler, and
3) 5 to 30% by weight of a hydrocarbon resin being compatible with the thermoplastic polymer and having a softening point in the range from 100 to 160 °C, determined in accordance with ASTM E 28,

the percentages being each time related to the total weight of the mixture.

**2.** Film as claimed in claim 1, characterized in that the core layer additionally contains
4) 0.2 to 0.8% by weight, relative to the total weight of the mixture, of a stabilizer based on a phosphite compound.

**3.** Film as claimed in claim 1 or 2, characterized in that the amount of filler is 5 to 15% by weight and that the filler employed has an average particle size of 0.2 to 4 µm and a degree of whiteness exceeding 90%.

**4.** Film as claimed in any of claims 1 to 3, characterized in that one or both top layer(s) is/are heat-sealable.

**5.** Film as claimed in any of claims 1 to 4, characterized in that at least one of the top layers is not heat-sealable and is preferably comprised of an isotactic propylene homopolymer.

**6.** Film as claimed in any of claims 1 to 5, characterized in that at least one of its surfaces is additionally provided with a cold-sealable layer, a metal layer and/or a paper layer.

**7.** Film as claimed in any of claims 1 to 6, characterized in that the top layers have a thickness of 0.1 to 5 µm, in particular of 0.5 to 3 µm, whereby the total thickness of the film is in the range of 20 to 120 µm.

**8.** Film as claimed in any of claims 1 to 7, characterized in that calcium carbonate and/or titanium dioxide is/are used as filler(s).

9. Film as claimed in any of claims 1 to 8, characterized in that the core layer has a density of 0.8 $g/cm^3$ or less, in particular of 0.65 $g/cm^3$ or less.

10. Film as claimed in any of claims 1 to 9, characterized in that the resistance to delamination of the core layer is 1.8 N/15 mm or more, in particular 2 N/15 mm or more.

11. Film as claimed in any of claims 1 to 10, characterized in that the first, thinner top layer has a thickness of 0.1 to 2 µm and is comprised of
   - a propylene copolymer or
   - a mixture comprising two or more of these propylene copolymers or terpolymers and optionally polyethylene or
   - polyethylene,

   the maximum propylene proportion contained in this top layer being 95.5% by weight, and in that the other, thicker top layer has a thickness of 1.5 to 5 µm and is comprised of
   - a propylene homopolymer or
   - a propylene/ethylene copolymer,

   the minimum propylene proportion contained in this top layer being 96.5% by weight.

**Revendications**

1. Pellicule multicouche polyoléfinique opaque coextrudée, orientée biaxialement par étirage, comprenant une couche centrale opaque et deux couches de recouvrement transparentes, caractérisée en ce que la couche centrale est essentiellement constituée d'un mélange de
   1) 45 à 90 % en poids d'un polymère thermoplastique à base de propylène,
   2) 5 à 25 % en poids d'une charge particulaire inerte,
   3) 5 à 30 % en poids d'une résine hydrocarbonée compatible avec le polymère thermoplastique et ayant un point de ramollissement dans la plage de 100 à 160 °C, déterminé selon ASTM E 28,

   les pourcentages se rapportant au poids total du mélange.

2. Pellicule selon la revendication 1, caractérisée en ce que la couche centrale contient en outre
   4) 0,2 à 0,8 % en poids d'un stabilisant à base d'un composé de type phosphite, par rapport au poids total du mélange.

3. Pellicule selon la revendication 1 ou 2, caractérisée en ce que la proportion de la charge va de 5 à 15 % en poids et la charge utilisée a une taille moyenne de particules de 0,2 à 4 µm et un degré de blancheur de plus de 90 %.

4. Pellicule selon l'une des revendications 1 à 3, caractérisée en ce qu'une couche de recouvrement ou les deux est (sont) soudable(s) à chaud.

5. Pellicule selon l'une des revendications 1 à 4, caractérisée en ce qu'au moins l'une des couches de recouvrement n'est pas soudable à chaud et consiste de préférence en un homopolymère de propylène isotactique.

6. Pellicule selon l'une des revendications 1 à 5, caractérisée en ce qu'elle comporte en outre, sur au moins une surface, une couche de soudage à froid, une couche métallique et/ou une couche de papier.

7. Pellicule selon l'une des revendications 1 à 6, caractérisée en ce que l'épaisseur des couches de recouvrement va de 0,1 à 5, en particulier de 0,5 à 3 µm, l'épaisseur totale de la pellicule étant dans la plage allant de 20 à 120 µm.

8. Pellicule selon l'une des revendications 1 à 7, caractérisée en ce que la charge comprend du carbonate de calcium et/ou du dioxyde de titane.

9. Pellicule selon l'une des revendications 1 à 8, caractérisée en ce que la densité de la couche centrale est ≦ 0,8, en particulier ≦ 0,65 $g/cm^3$.

**10.** Pellicule selon l'une des revendications 1 à 9, caractérisée en ce que la résistance au délaminage de la couche centrale est ≧ 1,8, en particulier ≧ 2 N/15 mm.

**11.** Pellicule selon l'une des revendications 1 à 10, caractérisée en ce que la couche de recouvrement plus mince présente une épaisseur de 0,1 à 2 µm, et consiste en
- un polymère à base de propylène ou
- un mélange de polymères composé de deux ou plus de deux de ces polymères à base de propylène, et éventuellement de polyéthylène, ou
- polyéthylène,

la proportion de propylène dans cette couche de recouvrement étant au maximum de 95,5 % en poids, et en ce que l'autre couche de recouvrement plus épaisse présente une épaisseur de 1,5 à 5 µm et consiste en
- un homopolymère de propylène ou
- un copolymère propylène/éthylène,

la proportion de propylène dans cette couche de recouvrement étant au moins de 96,5 % en poids.